# EUROPEAN PATENT SPECIFICATION

(11) **EP 2 438 820 B1**
(45) Date of publication and mention of the grant of the patent: **08.01.2014**
(21) Application number: 11152848.5
(22) Date of filing: 01.02.2011
(51) Int. Cl.: A23L 1/01, A47J 27/16, F26B 11/18

(54) **Method and apparatus for oil-free production of food products in a rotary impingement oven**
Verfahren und Vorrichtung für die ölfreie Herstellung von Lebensmittelprodukten in einem Drehumwälzungsofen
Procédé et appareil pour la production sans huile de produits alimentaires dans un four à convection rotatif

(30) Priority: 05.10.2010 US 924809
(43) Date of publication of application: 11.04.2012
(73) Proprietor: Heat and Control, Inc., Hayward, California 94545 (US); Intersnack Group GmbH & Co. KG, 40468 Düsseldorf (DE)
(72) Inventor: Cardidis, Andrew A., San Carlos, CA 94070 (US); Caridis, Anthony A., Redwood City, CA 94062 (US); Morris, Anthony Wade, San Carlos, CA 94070 (US); Padilla, James A., Pacifica, CA 94045 (US); Padilla, Mathew L., Pacifica, CA 94045 (US); Pierce, Christopher R., Oakland, CA 94602 (US); Haferkamp, Reiner, 41515, Grevenbroich (DE)
(74) Representative: Becker Kurig Straus

(56) References cited:
- EP-A2- 0 743 497
- GB-A- 1 407 753
- JP-A- 56 100 290
- JP-A- 2002 295 975
- SU-A1- 534 624
- US-A- 3 300 993
- US-A- 4 334 366
- US-A- 5 702 746
- US-A1- 2004 247 762
- US-A1- 2008 179 318
- US-A1- 2009 110 794

## Description

### Field of the Invention

This invention is directed to a method and apparatus for preparing dehydrated food products, especially potato chips and like products through application of a process vapor, and, more particularly, to a method and apparatus for impinging process gasses at high velocities and at predetermined temperatures and moisture contents against the surfaces of a food product until a preferred product moisture content is realized. This may occur in several steps or in product treatment zones until the desired finished moisture content and product cooking is achieved.

### Background of the Invention

Conventionally, potato chips and like snack products have been prepared in hot oil baths with controlled cooking temperature profiles for obtaining the desired oil content and crispness which correlates with moisture content in the finished products. Although the vast majority of these products are produced in this manner, it is believed in some quarters that a non-oil fried chip is a more healthful food product for humans. Most desirably such a chip must have the appearance, taste and mouth feel of the conventional chip to be commercially viable.

A non-oil fried snack food is frequently cooked in an oven employing as the heating medium circulating hot air or microwave energy, or combinations thereof. In the case of cooking potato slices and similar products it is important that while cooking the individual products or slices do not overlap and thus tend to clump or mass together which would result in an unacceptable cooked product. Thus the placement, positioning and handling of such uncooked products during the cooking process is critical. Placing uncooked product pieces in a single layer upon an oven's horizontal conveyor belt for cooking may be satisfactory for some limited production purposes. However this configuration is economically unsatisfactory where high production quantities are specified thus suggesting an oven cooking apparatus with a prohibitively large cooking area occupying a vast plant floor space.

Air impingement ovens have been adopted in the process food and snack food fields for a wide variety of product applications. U.S. Pat. Nos. 5,934,178 and 6,146,678 granted to Andrew A. Caridis, et al. disclose apparatus and processes which have been widely adopted for cooking by impinging upon raw food products a cooking vapor at selected temperatures, velocities and moisture contents selected to suit cooking conditions. The food products are carried on a vapor permeable, wire mesh, horizontally moving conveyor during the cooking process while the process vapor is impinged upon the food products from above and below the conveyor belt. During the cooking process the products are substantially stationary in a horizontal position on the conveyor belt although some unintended movement of the products has been observed. Although air impingement cooking processes have received great success with many different products it is challenging to apply the principles of air impingement to high output production of potato chips and the like. European Patent EP 0370021, Bellas, Inc. applicant, International Publication WO 89/00393, 26 January 1989, discloses an oven employing a product conveyor and jet tubes for impinging gases at predetermined humidity, temperature and velocity upon products on the conveyor. Alternate zones of impingement and non impingement establish a thermal pulsing heat application to the products.

EP 0 743 497 A2 discloses a method and apparatus for drying a food granule slurry in which water and wet food granules are fed to a perforated rotating barrel.

GB 1 407 753 discloses a method and apparatus for treating particulate material such as chips with a gas.

From a commercial standpoint some of the most important characteristics of a potato chip are taste, over all appearance and color as well as the "crunch" feeling in the mouth when consumed. Industry standards have been adopted covering these characteristics. An "off' taste potato chip product must be avoided and a chip having a taste suggesting a "raw" or uncooked potato is not acceptable.

It has been determined that in a finished cooked chip the potato raw or uncooked taste can be tempered by insuring that the initial gelatinization of the starches on the potato slice surfaces is realized quite early in the cooking process. However, the gelatinized surfaces of the yet non-fully cooked potato slices have a glue-like stickiness that must be dealt with because the slices with their sticky surfaces will tend to adhere to one another and together form a clump of slices. This is an unacceptable result and such a product would be rejected in the marketplace. Thus there must be achieved in the non-oil fried chip, derived from root crops, an elimination of the raw or "green" taste as well as control of slices clumping together during the cooking step. Handling of the potato slices so as to eliminate clumping while they are in a gelatinized state is a critical step in the process of cooking a non-fried potato, or other root crop, chip.

An unintended constituent in many cooked snack food products, including potato chips, is acrylamide. Acrylamide was accidentally discovered in foods in April 2002 by scientists in Sweden when they found the chemical in starchy foods, such as potato chips. Production of acrylamide in the heating/cooking process was shown to be temperature-dependent and was not found in foods that had been boiled or in foods that were not heated. Acrylamide levels appear to rise as food is heated for longer periods of time. There is uncertainty still over the precise mechanisms by which acrylamide forms in foods, but many believe it is a byproduct of the Maillard reaction. In fried or baked goods, acrylamide may be produced by the reaction between asparagine and reducing sugars (fructose, glucose, etc.) at temperatures above 120 °C (248 °F). Governmental agencies have scrutinized the presence of acrylamide in food products and on 2005-08-26, the California attorney general filed a lawsuit against prominent makers of French fries and potato chips to warn consumers of the potential risk from consuming acrylamide. The lawsuit was settled on 2008-08-01 with the food producers agreeing to reduce acrylamide levels in half. The settlement required the producers to reduce acrylamide to 275 parts per billion (ppb) in three years. Presently there is a need for an efficient and reliable process to produce these food products, especially potato chips, within or below that level of acrylamide content.

In the study of producing potato chips in processes where the conventional cooking oil bath has been eliminated, it has been learned that it is highly beneficial to quite early in the process to set the initial chip structure. By this is meant that it is important quickly to develop the cell structure including blisters in the chip as well as chip color and integrity by rapidly removing moisture from the chip slice. This does not mean reaching the chip final moisture content but to achieve an intermediate moisture content, for example 30°k moisture, wherefrom final moisture removal may be conducted as desired. Impingement of a process vapor in a cooking process can contribute significantly to dehydration or drying of the product where the speed, impingement focus and moisture content of the vapor are controlled.

### Summary of the Invention and Objects

The present inventions in summary reside in a process and an apparatus according to claims 1 and 10, wherein food products, in particular snack food products, are oil-free prepared. A potato, an exemplary root crop, is prepared for cooking for instance by peeling, slicing, and washing the potato slices followed by drying off the slice surface moisture. The prepared food products are conveyed into rotatable, longitudinally extending cage-like drum with cylindrical, foraminous sidewall construction and disposed within at least one oven atmosphere. A process vapor within the impingement oven at a temperature substantially higher than that of the food products is impinged against a first sector of the cage sidewall where the food products are disposed. The process vapor is withdrawn at a temperature cooler than the initial temperature from a second sector of the cage while the cage is rotated and the food products are urged to traverse the cage longitudinally thereby reducing the moisture content of the food products to fall in the range of about 20% to 70% moisture, and then removing the food products from the cage-like drum for further treatment.

A rotary air impingement oven and the process performed thereat enable volume production of oil-free food products including those from root crops such as potato chips. The over contains a cage-like drum with perforate, containing product therein, are exposed to temperature and velocity controlled impinging process vapor which is withdrawn continuously during drum rotation. The food products within the drum are urged by an internal baffle towards the drum discharge during rotation

A general object of this invention is to provide a process and an associated apparatus that will afford the preparation of food products and in particular snack food products including a potato chip and the like in a non-oil cooking process and yet having the taste, appearance and "mouth feel" like that associated with food products, otherwise prepared.

Another object of this invention is to provide an apparatus in the form of a rotary impingement oven wherein various products may be prepared by the impingement of a temperature and moisture controlled process vapor upon the products as the same are urged through the oven.

Still another object of this invention is to provide a process wherein by control of the moisture content and temperature of a food product the generation of acrylamide is materially reduced.

Yet another object of this invention is to provide an air impingement process that permits rapid dehydration of potato slices while developing gelatinization of the slice surfaces and to set the initial chip structure including color and blistering of the slice thereby avoiding a "non-green" or raw taste in the finished product.

A further object of this invention is to provide a process including dehydration of a sliced root product in an atmosphere developed in one or more air impingent rotary ovens so as to reach a predetermined intermediate slice moisture content and then removing substantial residual moisture from the slice in the atmosphere of a dryer so as to obtain the final slice moisture content.

According to the present invention, the food products are introduced into a drying zone for a time, which is sufficient to reduce the food products (31) moisture content to fall in the range of about 1.20% to 2.50% moisture.

According to an embodiment of the present invention, the temperature of the process vapor as impinged upon the food products falls in the range of about 350°F to 450°F corresponding to 177°C to 232°C.

According to an embodiment of the present invention, the velocity of the process vapor as impinged upon the food products falls in the range of about 5,000 to 15,000 feet per minute (fpm) corresponding to 1,525 to 4,573 meters per minute (mpm).

According to an embodiment of the present invention, the cage upon which the process vapor is impinged is rotated about at a rate that falls in the range of 4 rpm to 60 rpm (revolutions per minute). According to an embodiment of the present invention, the cage is rotated about at a rate that falls in the range of 4 rpm to 60 rpm. According to an embodiment of the present invention, the cage is rotated about at a rate that falls in the range of 4 rpm to 40 rpm.

According to an embodiment of the present invention, longitudinal movement of the food products within the rotatable cage is urged by a helically configured, internal stationary baffle, which urges longitudinal movement of the food products within the cage.

According to an embodiment of the present invention, sliding movement of the food products along the sidewall of the rotatable cage (13) is attenuated by sidewall gripping forces.

According to an embodiment of the present invention, the food products are subjected to a plurality of oven environments to achieve the desired exit moisture condition. The air impingement oven comprises a plurality of oven environments for subjecting the food products to different process vapor environments to achieve the desired exit moisture condition.

According to an embodiment of the present invention, the food products comprise snack food products including inter alia root crops and chips thereof; vegetables and chips thereof; pallets of expansion, direct extruded products, nuts and nut products, seeds or grains and meat containing food products, wherein the process for oil-free producing starts from the form of the food products with substantially original moisture content to obtain a dehydrated form of the food products having a reduced moisture content.

According to an embodiment of the present invention, preparing the starting food product material includes inter alia at least one or several preparation steps of peeling slicing, washing, extruding, coating and drying.

According to an embodiment of the present invention, the process and impingement oven processed thereat are suited for producing from a crop root dehydrated chips and includes preparing the starting crop material by peeling, slicing, washing and drying off the slices surface moisture.

The foregoing and other objects and advantages of the invention will become apparent from the detailed description, which follow taken in connection with the accompanying drawings and diagrams.

### Brief Description of the Drawings

Fig. 1 is a flow diagram embodying the process and employing the apparatus of the present invention.
Fig. 2 is a transverse cross section diagrammatic view of a rotary air impingement oven constructed and arranged according to the principles of the present invention.
Fig. 3 is an enlarged sectional view taken in the direction of the arrows 3-3 in Fig. 2.
Fig. 4 is a further enlarged view, partially broken away, of an end portion of a cage-like drum incorporated into the air impingement oven of Fig. 2.
Fig. 5 is a still further enlarged view, partially broken away, of the expanded metal sidewall structure of the drum shown in Fig. 4.
Figs. 6 and 7are respectively side and elevation views of the rotatable drum drive and support.
Fig. 8 is a greatly enlarge sectional view taken in the direction of the arrows 8-8 in Fig. 4.
Figs. 9, 10 and 11 are views like Fig. 8 but on a reduced scale illustrating the process air flow with respect to the food products in the cage-like drum.
Figs. 12 and 13 are views showing the helical baffle mounted in the drum and, Fig. 13, a close-up showing the dimpled surface of the helical baffle.
Fig. 14 is a curve pertinent to the rotary impingement process depicting time plotted against the percentage of moisture content in slices treated in the process.

It should be noted that same reference signs throughout the accompanying drawings and diagrams refer to same of like components of the present invention.

### Description of the Preferred Embodiments

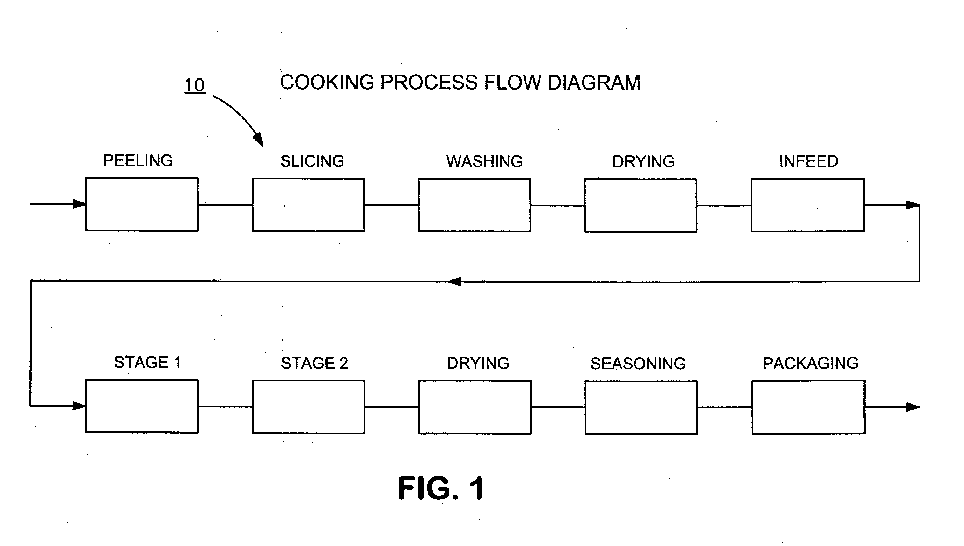

Referring to Fig. 1, there is shown in block diagram format an overview of the slice cooking process 10 of the present invention. There is no hot oil cooking bath in this process 10 and is intended to overcome from a health perspective the short comings inherent in hot oil cooked chips. The preliminary steps for preparing a root crop vegetable such as potatoes for oil-less cooking are indicated in the top 5 boxes of Fig. 1. Those steps comprise peeling skin from the potato, then slicing the peeled potato to a referred thickness, say 0.063 inches (1.6 mm), after which the slices are washed vigorously in water for removal of broken cells and other vestiges of surface starch. In a subsequent step the surface water is removed from the slices such as by a blast of air or by air suction so that when the slices are introduced into the cooking environment, as represented by the "Infeed" box, substantially all of the surface water and other impurities have been removed from the slice surfaces.

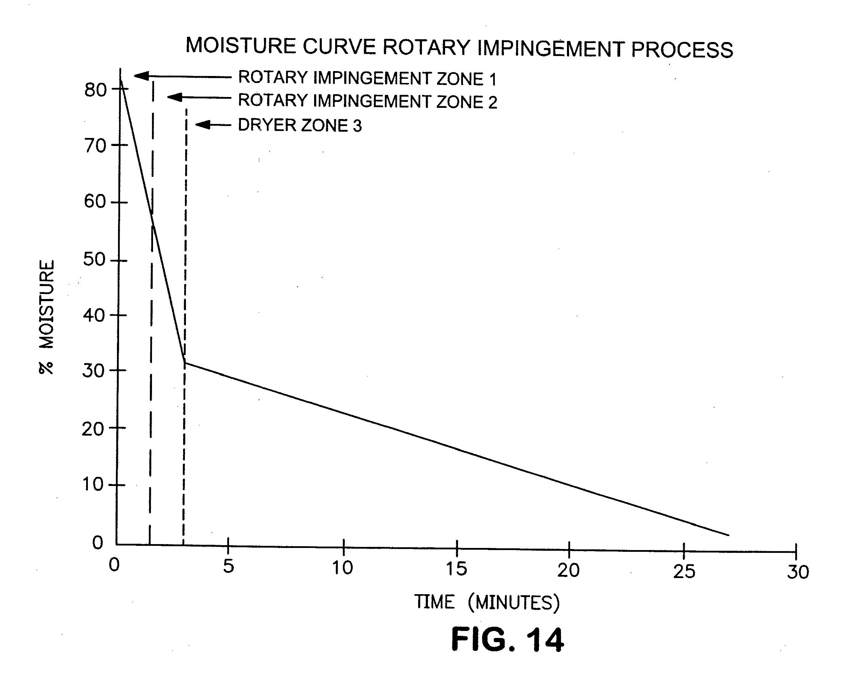

Referring now to Fig. 14 in connection with Fig.1, it will be understood that the desired dehydration or moisture removal from the slices may be achieved in a single treatment in an air impingement oven, to be described in detail below, or in a combination of impingement ovens with a dryer wherein moisture from the slice is removed more gradually that is the case when employing an impingement oven. Fig. 14 indicates slice dehydration in zones 1, 2 and 3, stage 3 being the dryer. Complimenting this is Fig. 1 which indicates the equivalent in the boxes "stage 1, stage2 and drying." Thus the subject process 10 as disclosed includes the use in series of two impingement ovens followed by a dryer although other combinations can be practiced as well to achieve desired results depending on the starting products and goal results.

Referring specifically to Fig. 14, the potato slices may be reduced from their initial 80% moisture content to about 30% in a short time period of about 3 minutes in an air impingement environment where the temperature is in the 350 to 450 °F range (177 °C to 332 °C) and the air velocity at about 5000 fpm (1525 mpm). Thereafter the slices are introduced into a through circulation dryer, zone 3, for a time period to achieve the final moisture content of the slices/chip which is on the order of 1.5% to about 2.5%. This may occur over a 22 to 27 minute time period.

The chips finally dehydrated in the through circulation dryer are moved along in the production process to a seasoning stage where the appropriate final taste is established. Thereafter the seasoned chips are conveyed to a packaging station, all as indicated in Fig.1.

In the following, definitions and specifications relating to positions in space and relative positions in space should be understood in relationship to the weight force vector.

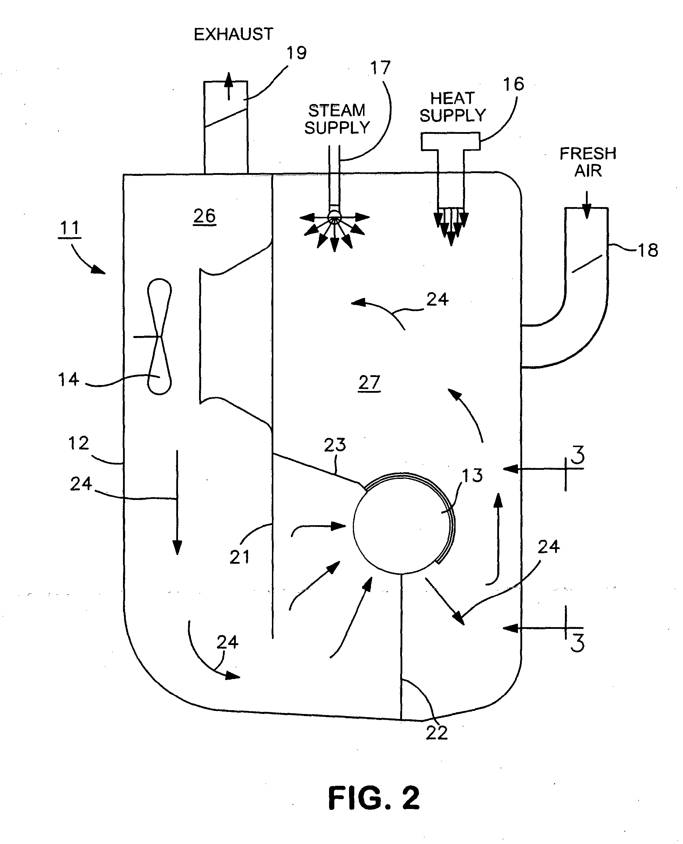

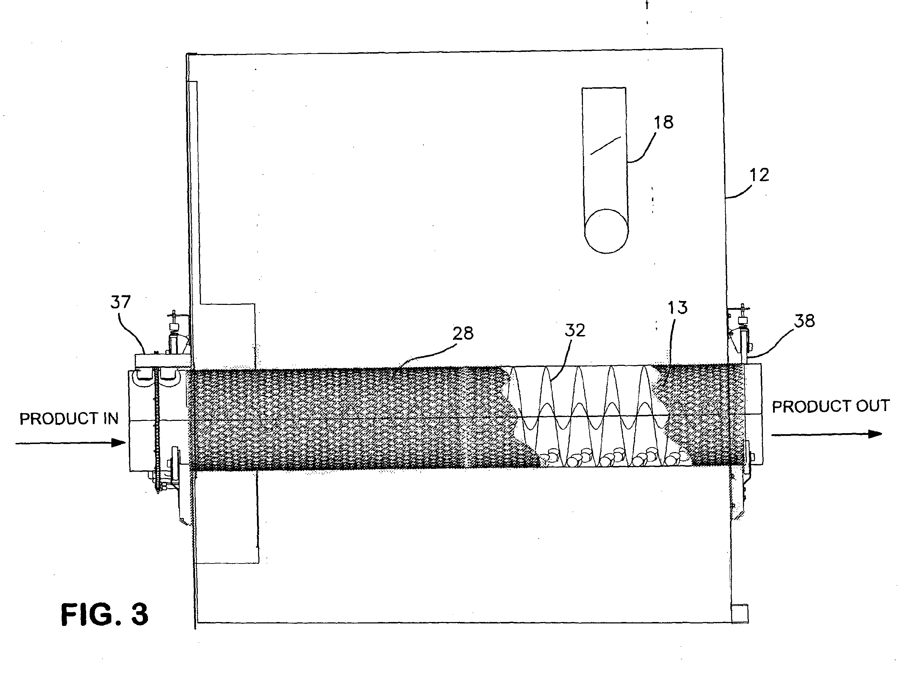

According to a preferred embodiment of the present invention, an air impingement oven 11, made in accordance with the principles of the present invention, is generally indicated in Figs. 2 and 3. The oven 11 comprises an insulated shell or casing 12, a cage-like drum 13 supported and equipped for rotation therein, at least an air impulsion fan 14, a heat supply 16, a moisture steam inlet supply, 17, a fresh air input conduit 18 and an exhaust stack 19. The longitudinal axis of the cage-like drum 13 is substantially oriented horizontally or inclined downwards at least slightly from its product feed end 37 in direction to its product discharge end 38.

Within the oven casing 12 internal partitions 21, 22 and 23 define a process vapor flow path to and from the fan 14 as indicated by the arrows 24. It will be understood that when the fan 14 is operating the partitions or baffles 21-23 divide the oven 11 into a high pressure compartment 26 in flow direction of the fan 14, for example on the left-hand side of Fig. 2, and a lower pressure compartment 27 on suction side of the fan 14, shown on the right-hand side of Fig. 2. The heat supply 16, moisture steam inlet supply 17, and fresh air input conduct 18 supply heat energy, moisture steam and fresh air into the lower pressure compartment 27. Their individual volume flows are controlled to obtain a process vapor or more general process gas having a defined composition of the supplied components. The composition and properties of the supplied components define and form the atmosphere of the impingement oven in at least one oven environment. The individual supplies of the heat supply 16, moisture steam inlet supply 17, and fresh air input conduit 18 may be controlled with the help of sensors arranged within the impingement oven. Such sensors may comprise at least one of temperature, moisture, air velocity and pressure sensors. The process vapor circulation in the impingement oven 11 is driven by the fan 14. Excess process vapor is discharged through the exhaust stack 19, which also allows control of the pressure difference between the lower pressure compartment 27 and the high pressure compartment 26 and withdrawal of moisture extracted from the processed food products.

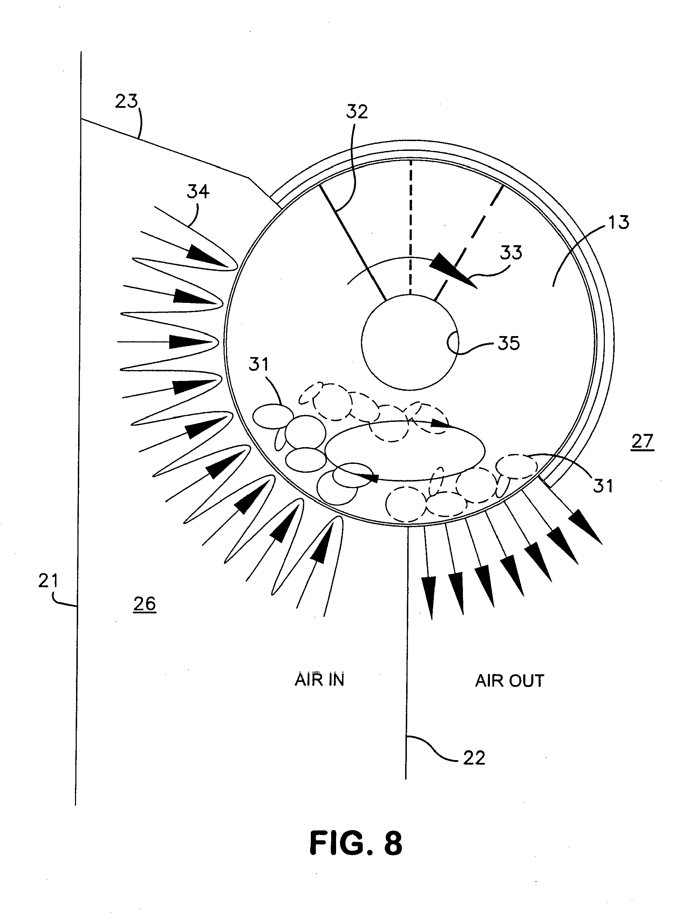

The fan is equipped to operate at a level to propel the process vapor at velocities in the range of 7,000 to 12,000 fpm (2,134 to 3,658 mpm). The cage-like drum 13 is disposed so that a sector portion of its sidewall is in the high pressure compartment 26 and another sector portion of its sidewall is in the lower pressure compartment 27, best shown in Fig. 8. By this configuration, the process vapor formed from fresh air, moisturized from the moisture, inlet 17, and heated by the heat supply, 16, is propelled by the fan 14 downstream in the direction of the arrows 24 from the high pressure compartment 26 through the drum, 13, and into the lower pressure compartment 27. The high pressure compartment, in which the fan 14 is disposed in preferably designed to have a channel-like structure to support the impulsion or acceleration of the process vapor therein. The lower pressure compartment, in which the heat supply 16, moisture steam inlet supply 17, and fresh air input conduit 18 enter, is preferably designed to have a chamber-like structure to support the forming and mixture of the process vapor from the respective supplied components.

The lower pressure compartment 27 and the high pressure compartment 26 are separated from each other by the internal partitions 21, 22 and 23. The internal partitions 21, 22 and 23 have two through passages, one of which is an inlet passage or duct, through which the process vapor passes from the lower pressure compartment 26 into the high pressure compartment 27. The cage-like drum 13 is disposed within the other through passage. The process vapor of the high pressure compartment 26 is impinged against the cage-like drum 13 and the food products therein and withdrawn from the cage-like drum 13 into the lower pressure compartment. The above described circulation of the process vapor is driven by the fan 14. It should be understood that in this context the fan 14, which is described to propel the process vapor, is only one embodiment of the present invention. In a more general embodiment, a circulation device comprising for instance at least one of a propeller (as illustrated), an air turbine, a ventilator and the like. The inlet passage or duct is arranged in relationship to the circulation device. The circulation device causes also the pressure difference between the pressure of the process vapor in the high pressure compartment 26 and the pressure of the process vapor in the lower pressure compartment 27 in that the process vapor is accelerated and compressed.

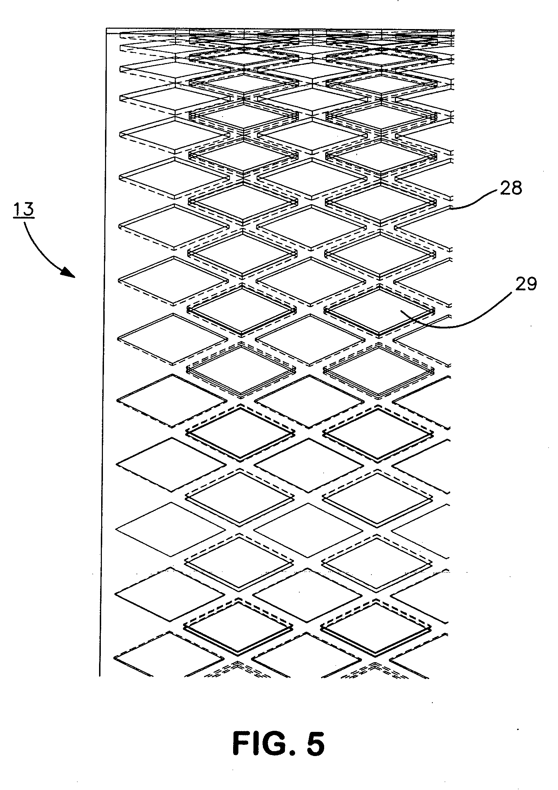

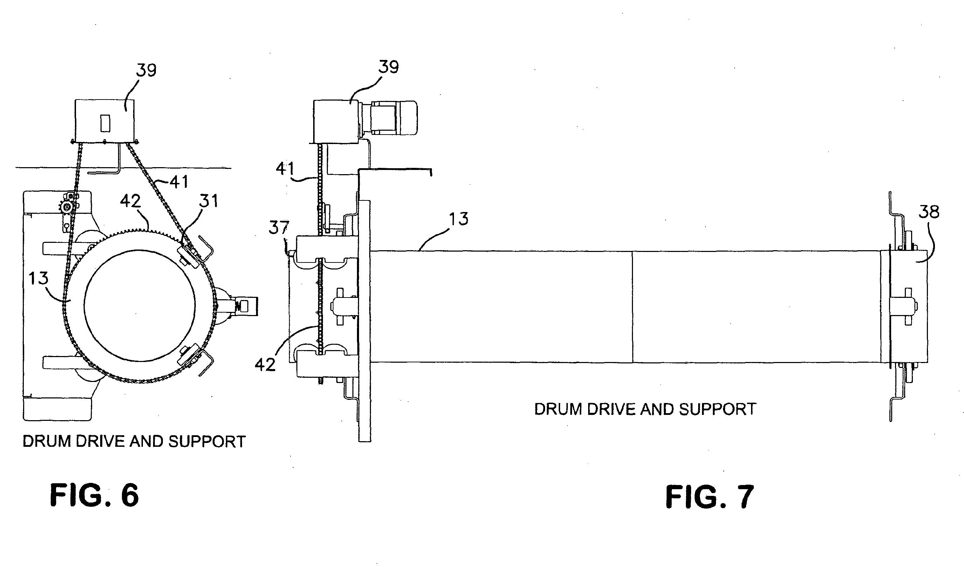

The drum or cage 13 is illustrated in Figs. 3-7 and is configured as a longitudinally extending cylinder rotatably mounted at its ends, its expanded metal sidewalls 28 being air pervious or foraminous for efficient passage of process vapor there through. The expanded metal cage sidewalls 28 are clearly shown in Fig. 5 and present a multiplicity of diamond shaped holes 29 of for instance about 0.50 inches (1.27 cm) in the minor dimension and about for instance 1.0 inches (2.54 cm) in the major dimension which extends axially of the cage 13. The manufacturing process for producing the expanded metal generates a non-smooth internal surface for the cage. The non-smooth surface contains small ridges and metal burrs disposed on the interior of the drum. In this particular application during drum rotation, the ridges and burrs are desirable and afford during drum rotation a grip or "tooth" acting upon the food products, 31, and assist in lifting the food products up a portion of the sidewall thus reducing the tendency of the food products such as the aforementioned potato slices sliding together into a mass or clump along the bottom of the drum, see in Figs. 8-11.

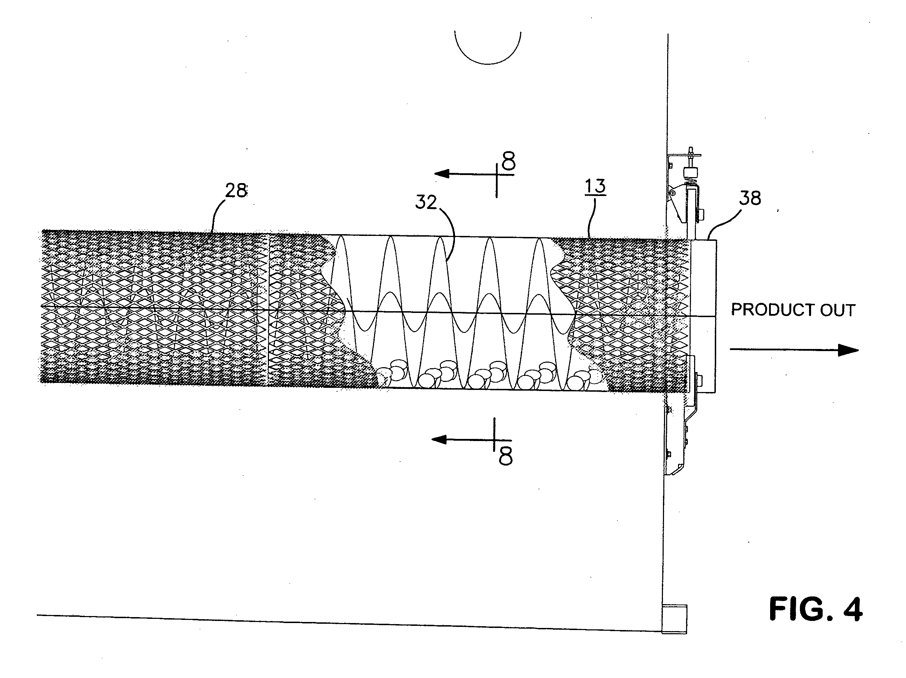

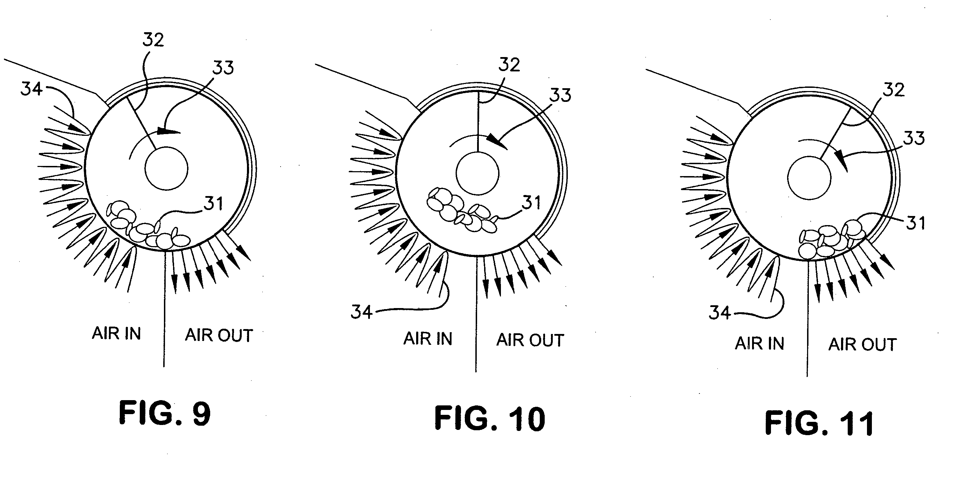

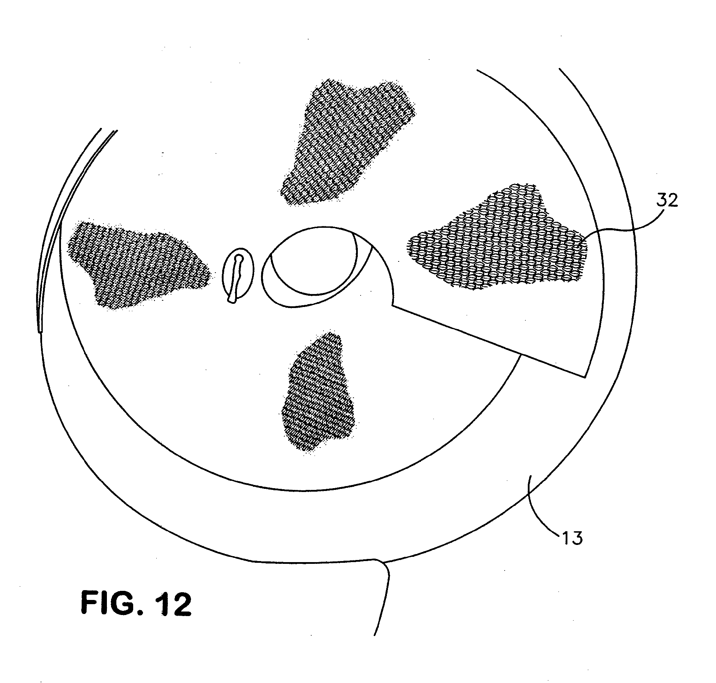

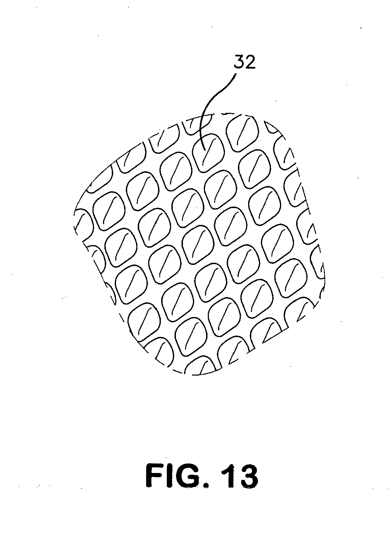

As shown in Figs. 3 and 4, a centrally arranged baffle 32 formed as a helix is secured to the drum interior extending there along and serves to urge the food products exemplified as slices 31 along the longitudinal direction of the cage or drum 13 as it is rotated in the direction of the arrow 33, Figs 8-12. Due to its helical configuration the baffle 32 (shown best in Figs. 3 and 4) effectively defines with the cage or drum sidewalls pocket-like, moving compartments separating food products into groups for treatment with the process vapor moving into and out of the cage as indicated in Figs. 9-11. By confining the food products into packets or groups the dehydration of the food products has been found to be more uniform through the group and for the entire output of the oven 11 than if there were no mechanical separation of the food products during treatment. A central cylindrical member 35 extends along the axis of the helical baffle serving to block slice movement side to side across the helix 32. It was found that a dimpled surface of the helix reduced the sticking of gelatinous food products to the helix flights, as shown in Figs. 12 and 13.

The impingement process vapor is directed against the sidewalls of the cage from an array of Vee shaped discharge ports 34 spaced adjacent to the cage 13 as shown in Figs. 8-11. The discharge ports may be constructed as taught in U.S. Patent No. 6,146,678, granted to A. Caridis, et al. Nov. 14, 2000.

Referring to Figs. 3, 4, 6 and 7, the drum or cage 13 is mounted in the oven 11 for speed controlled rotation. To this end drum support structures 37, 38 are arranged outboard the oven sidewalls. Structure 37 includes a variable speed motor drive 39 coupled to a sprocket and chain drive train 41, a driven sprocket 42 being mounted on the product feed end of the drum 13. Suitable bearings (not shown) are provided for rotatably supporting the drum 13 in the support structures 37 and 38.

The inlet sector portion of the sidewall of the cage-like drum 13, at which the process vapor is impinged from the high pressure compartment 26, and the sector portion of the sidewall of the cage-like drum 13, through which the process vapor is withdrawn from the cage-like drum 13 to the lower pressure compartment 27, have differing areas. As illustrated in cross section drawing shown in Fig. 2, the inlet sector portion of the sidewall of the cage-like drum 13, against which the process vapor is impinged, has an arc length defined by a central subtended angle in a range approximately between 180° and 90° and in particular in a range approximately between 120° and 1500. The outlet sector portion of the sidewall of the cage-like drum 13, through which the process vapor is withdrawn, has an arc length defined by a central subtended angle in a range approximately less than 90° and in particular in a range approximately between 30° and 60°. The central subtended angles should be understood as being defined with respect to a vertical extending through the longitudinal axis of the cage-like drum 13.

The internal partition 22 provided below the cage-like drum 13 to separate the high pressure compartment 26 and the lower pressure compartment 27 is arranged substantially in alignment with the longitudinal axis of the cage-like drum 13 and adjoins the surface of the cage-like drum 13 without having contact therewith. Hence, the process vapor is impinged against the cage-like drum 13 substantially in horizontal and upwards direction, whereas the process vapor withdrawn from the cage-like drum 13 substantially in downwards direction (cf. arrows in Fig. 2 illustrating the flow of the process vapor with respect to the cage-like drum 13). The remaining surface of the sidewall of the cage-like drum 13 is covered by a channel like surrounding wall such that process vapor is prevented to pass through. In Fig. 2, the channel like surrounding wall is illustrated as a continuation of the internal partition 23. In further embodiments, the internal partitions 22 and 23 as well as the channel like surrounding wall partially covering the cage-like drum 13 may be configured to allow for different central subtended angles thereby allowing for different areas of the inlet sector portion and the outlet sector portion as well as to accept cage-like drums with differing diameters.

As further shown and best understood from Figs. 2, 8 and 9 to 11 , the passing of the process vapor supports the circulation of the food products in the cage-like drum 13. As aforementioned, the ridges and burrs provided at the drum interior surface are desirable and afford during drum rotation a grip or "tooth" acting upon the food products 31 and assist in lifting the food products up a portion of the sidewall. At a determined lifting height, the lifted food products fall back due to gravity effect. The rotation direction of the cage-like drum 13 is configures to move the food products lying on the bottom of the inner surface of the cage-like drum 13 from the outlet sector portion to the inlet sector portion of the process vapor. The process vapor passing through the cage-like drum 13 blows the lifted food products in opposite direction of the drum rotation from inlet sector portion of the sidewall of the cage-like drum 13, against which the process vapor is impinged, the towards the outlet sector portion of the sidewall of the cage-like drum 13, through which the process vapor is withdrawn from the cage-like drum 13, thereby supporting the back circulation of the food products within the cage-like drum 13 against rotation direction additionally driven by the process vapor passing through the cage-like drum 13 with the high velocity caused by the fan 14. The passing process vapor also serves for a separation of the individual pieces of the food products by swirling, thereby supporting to eliminate clumping of the individual pieces of the food products.

Although the present invention has been described at the beginning in the context of preparing root crops and in particular potato chips, it should be understood that the present invention is not limited thereto. Several food products, which are conventionally prepared by cooking or frying in oil, can be oil-free processed in the above described impingement oven. Such food products appropriate for oil-free preparation comprise in particular snack food products including inter alia the aforementioned root crops and chips thereof, vegetables and chips thereof, expansion of pallets, Direct extruded products, nuts, seeds or grains and meat containing food products. The conventional preparation of aforementioned food products, i.e. the preparation in a bath of hot oil, is subjected to the same drawbacks and problems set forth in the background description with respect to potato chips.

Pellets are produced in a similar way as noodles. A mixture of raw materials such as potatoes and different types of cereals with salt and water is pressed through an extrusion die. Conventionally, in an oil-bath based production process, the pellets get their crunchy bite by shortly frying them in vegetable oil and individual seasoning afterwards. The aforementioned air impingement oven 11 according to an embodiment of the present invention allows for expansion of such pallets in an oil-free preparation process.

Direct extruded products or direct extrudates mean food products obtained by direct extruding or pressing dough of e.g. maize, rice, potatoes or wheat through an extrusion die under high pressure, wherein different extrusion dies make different forms out of the dough. Direct extrudates include, but not limited thereto, peanut flips, cheese flips, cheese rings, onion rings, etc. The aforementioned air impingement oven 11 according to an embodiment of the present invention allows for an oil-free preparation process of such direct extrudates.

Nuts and nut products should be understood in the context of the present invention as peanuts, coated peanuts and further products classified colloquially as nuts including, but not limited thereto, almonds, macadamia nuts, walnuts, cashew nuts, Brazil nuts and the like with or without coating. Such nuts and nut products are conventionally prepared in an oil bath. The aforementioned air impingement oven 11 according to an embodiment of the present invention allows for an oil-free preparation process of such nuts and nut products.

In analogy to nuts and nut products seeds or grains are conventionally prepared in an oil bath. The aforementioned air impingement oven 11 according to an embodiment of the present invention allows for an oil-free preparation process of such seeds or grains.

Batter wrapped meat containing food products should be understood as snack products containing meat wrapped in batter such as chicken pieces or wings wrapped in batter, meat wrapped with a breadcrumb coating and the like. Such batter wrapped meat containing food products are conventionally prepared in an oil bath. The aforementioned air impingement oven 11 according to an embodiment of the present invention allows for an oil-free preparation process of such batter wrapped meat containing food products.

It should be further noted that the pre- and post-production processes above described with reference to the slice cooking process 10 illustrated in the schematic block diagram of Fig. 1 specifically consider the requirements of preparation of root crop slices such as potato slices. The preparation of the further above mentioned snack food products may require other pre-and post-production processes arranged downwards and upwards the air impingement process and air impingement oven 13, respectively. For instance, alternative or additional pre-production processes include peeling, coating such as coating with batter, mixed herbs and/or breadcrumbs and the like. This means that the present invention should not be understood as being limited to one or more of the aforementioned pre- and post production processes and the pre- and post-production processes depart from the core of the present invention.

The processing of the food products in the air impingement oven 11 is determined by several adjustable process parameters including inter alia the composition and properties of the process vapor such as moisture content and temperature; volume flow and velocity of the process vapor; area of the vapor inlet sector portion of the cage-like drum, area of the vapor outlet sector portion of the cage-like drum; distance between and size of the through holes, i.e. areal density, in the lateral area of the cage-like drum; and process time of the food products in the cage-like drum 13.

The slope or bias angle of baffle 32 for instance formed as a helix and the rotational speed of the cage-like drum 13 determine the resulting longitudinal conveyance speed of the food products from the food product inlet to the food product outlet of the cage-like drum 13. A longitudinal axis of the cage-like drum 13 may be designed to incline at least slightly downwards in direction of the product discharge end 38 of the cage-like drum 13 in order to support the conveyance of the food products through the cage-like drum 13. The length of the cage-like drum 13 and the speed of conveyance of the food products through the cage-like drum 13 determines the duration of stay of the food products within the cage-like drum 13.

The moisture content of the food products approaches the moisture content of the process vapor during duration of stay of the food products within the cage-like drum 13. The longer the food products stay within the cage-like drum 13 the closer the moisture content of the food products and the moisture content of the process vapor become.

Although some of the process parameters are described in the context of the exemplary potato chips and the processing thereof, those skilled in the art will appreciate that these process parameters including for instance number of impingement stages (number of oven environments), temperature ranges, air velocity ranges, cage hole sizes, processing time, moisture content of the process vapor and rotational speed of the cage-like drum also apply to the further food products and in particular snack food products described above.

It will be readily apparent that various modifications may be made to the structures and processes of this invention and still be within the scope of the present invention. In particular, in may be readily appreciated by those skilled in this art from the above description that the apparatus according to the invention provides for adjustability not only in the available rotational speeds of the cage-like drum as well as the fan speeds and the moisture content of the process vapor. The features of adjustability accord with better dehydration times and the resulting uniformity of the final product as to moisture content, quality and appearance. Accordingly, the scope of this invention shall only be limited within terms of the following claims.

## Claims

1. A process for oil-free producing of dehydrated food products which are one of potato chips, other root crop chips and pellets of expansion, the process including the preliminary steps of preparing the starting food products material, and then introducing the prepared food products (31) into at least one oven environment (11) having a rotatable, longitudinally extending cage (13) of cylindrical, foraminous sidewall construction,
the process further comprising:
impinging a process vapor at a temperature substantially higher than that of the food products (13) against a first sector of the cage sidewall (28) wherein the food products (13) are disposed;
withdrawing the process vapor at a cooler temperature from a second sector of the cage (13) while causing the cage (13) to rotate and the food products (31) to traverse the cage (13) longitudinally thereby to reduce the moisture content of the food products (31) to fall in the range of about 20% to 70% moisture,
removing the dehydrated food products (31) from the cage (13) for further treatment; and
introducing the food products (31) into a drying zone for a time to reduce the food products (31) moisture content to fall in the range of about 1.20% to 2.50% moisture,
wherein the first sector has an arc length defined by a central subtended angle in a range between 180° and 90°, wherein the second sector has an arc length defined by a central subtended angle in a range less than 90°.

2. The process of Claim 1, wherein the sidewalls of the cage (13) have a multiplicity of diamond shaped holes being approximately 0.50 inch and approximately 1.0 inches corresponding to approximately 1.27 cm and approximately 2.54 cm in minor and major dimensions,

3. The process of Claim 1 or 2, wherein the temperature of the process vapor as impinged upon the food products (31) falls in the range of about 350°F to 450°F corresponding to 177°C to 232°C.

4. The process of anyone of the Claims 1 to 3, wherein the velocity of the process vapor as impinged upon the food products (31) falls in the range of about 5,000 to 15,000 feet per minute corresponding to 1,525 to 4,573 meters per minute.

5. The process of anyone of the Claims 1 to 4, wherein the cage (13) upon which the process vapor is impinged is rotated about at a rate that falls in the range of 4 rpm to 60 rpm, preferably 4 rpm to 50 rpm, and most preferably 4 rpm to 40 rpm (revolutions per minute).

6. The process of anyone of the Claims 1 to 5, wherein longitudinal movement of the food products (31) within the rotatable cage (13) is urged by a helically configured, internal stationary baffle (32), which defines with the cage (13) moving compartments separating the food products into groups for treatment with the process vapor resulting in a more uniform dehydration, wherein the baffle (32) extends along the cage (13) from the one end to the other end thereof.

7. The process of Claim 5, wherein a central cylindrical member (35) extends along the axis of the baffle (32) provided to block movement of the food products (31) side to side across the helix (32).

8. The process of anyone of the Claims 1 to 7, wherein sliding movement of the food products (31) along the sidewall of the rotatable cage (13) is attenuated by sidewall gripping forces, wherein the sidewalls of the cage (13) have a dimpled surface to reduce sticking of the food products.

9. The process of anyone of the Claims 1 to 8, wherein the food products (31) are subjected to a plurality of oven environments (11) to achieve the desired exit moisture condition.

10. An air impingement oven for oil-free producing of a dehydrated food product, wherein the food products are one of potato chips, other root crop chips and pellets of expansion,
the air impingement oven comprising:
a product feed end (37) for accepting food products (31) into a rotatable, longitudinally extending cage (13) of cylindrical, foraminous sidewall construction (28) arranged in at least one oven environment (11), wherein the food products (31) have been prepared from starting food product material;
wherein the cage (13), in which the food products are disposed, has a first sector, against which a process vapor at a temperature substantially higher than that of the food products (31) is impinged, wherein the process vapor is provided in the oven (11);
wherein the cage (13), in which the food products (31) are disposed, has a second sector, at which the process vapor is withdrawn at a cooler temperature while the cage (13) is caused to rotate and the food products (31) to traverse the cage (13) longitudinally thereby to reduce the moisture content of the food products (31) to fall in the range of about 20% to 70% moisture, wherein the first sector has an arc length defined by a central subtended angle in a range between 180° and 90°,
wherein the second sector has an arc length defined by a central subtended angle in a range less than 90°; and
a product discharge end (38) for removing the food products (31) from the cage (13) for further treatment;
wherein the food products (31) processed in the air impingement oven (11) are further fed into a drying zone for a time to reduce the slice moisture content to fall in the range of about 1.20% to 2.50% moisture.

11. The air impingement oven according to Claim 10, wherein the sidewalls of the cage (13) have a multiplicity of diamond shaped holes being approximately 0.50 inch and approximately 1.0 inches corresponding to approximately 1.27 cm and approximately 2.54 cm in minor and major dimensions,

12. The air impingement oven according to Claim 10 or 11, wherein the temperature of the process vapor as impinged upon the food products (31) falls in the range of about 350 F to 450° F corresponding to 177°C to 232°C.

13. The air impingement oven according to anyone of the Claims 10 to 12, wherein the velocity of the process vapor as impinged upon the food products (31) falls in the range of about 5,000 to 15,000 feet per minute corresponding to 1,525 to 4,573 meters per minute.

14. 17. The air impingement oven according to anyone of the Claims 10 to 13, wherein the cage (13) upon which the process vapor is impinged is rotated about at a rate that falls in the range of 4 rpm to 60 rpm, preferably 4 rpm to 50 rpm, and most preferably 4 rpm to 40 rpm (revolutions per minute).

15. The air impingement oven according to anyone of the Claims 10 to 14, wherein the rotatable cage (13) has a helically configured, internal stationary baffle (32) for urging longitudinal movement of the food products (31) within the cage (13), wherein the baffle (32) defines with the cage (13) moving compartments separating the food products into groups for treatment with the process vapor resulting in a more uniform dehydration, wherein the baffle (32) extends along the cage (13) from the one end to the other end thereof.

16. The air impingement oven according to anyone of the Claims 10 to 15, the air impingement oven further comprising a central cylindrical member (35) extending along the axis of the baffle (32), which serves to block movement of the food products (31) side to side across the helix (32).

17. The air impingement oven according to anyone of the Claims 10 to 16, wherein the rotatable cage (13) has an internal surface for attenuating by sidewall gripping forces sliding movement of the food products (31) along the sidewall (28) thereof, wherein the sidewalls of the cage (13) have a dimpled surface to reduce sticking of the food products.

18. The air impingement oven according to anyone of the Claims 10 to 17, further comprising a plurality of oven environments (11) for subjecting the food products (31) to different process vapor environments to achieve the desired exit moisture condition.

## Patentansprüche

1. Verfahren zur ölfreien Herstellung von dehydratisierten Lebensmittelprodukten, die eins sind von Kartoffelchips, Chips aus anderen Wurzelfrüchten und durch Expansion hergestellte Pellets, wobei das Verfahren die Vorläufer-Schritte des Zubereitens des Ausgangsmaterials der Lebensmittelprodukte und dann Einführen der zubereiteten Lebensmittelprodukte (31) in wenigstens eine Ofenumgebung (11) mit einem rotierbaren, sich längs erstreckenden Käfig (13) mit zylindrischer und durchbrochener Seitenwandkonstruktion einschließt, wobei das Verfahren weiterhin umfasst:
Einwirken eines Verfahrensdampfes bei einer Temperatur, die wesentlich höher als die der Lebensmittelprodukte (13) ist, gegen einen ersten Sektor der Käfigseitenwand (28) in dem die Lebensmittelprodukte (13) angeordnet sind;
Abziehen des Verfahrensdampfes bei einer kühleren Temperatur von einem zweiten Sektor des Käfigs (13) während der Käfig (13) zur Rotation gebracht wird und die Lebensmittelprodukte (31) dazu gebracht werden den Käfig (13) dabei in Längsrichtung zu durchqueren, wobei der Feuchtigkeitsgehalt der Lebensmittelprodukte (31) reduziert wird, damit dieser in den Bereich von etwa 20% bis 70% Feuchtigkeit fällt,
Entfernen der dehydratisierten Lebensmittelprodukte (31) aus dem Käfig (13) zur weiteren Bearbeitung; und
Einführen der Lebensmittelprodukte (31) in eine Trocknungszone für eine Zeitspanne, um den Feuchtigkeitsgehalt der Lebensmittelprodukte (31) zu reduzieren, damit dieser in den Bereich von etwa 1,20% bis 2,50% Feuchtigkeit fällt,
wobei der erste Sektor eine Bogenlänge aufweist, die von einem zentralen entgegengesetzt gelegenem Winkel in einem Bereich zwischen 180° und 90° definiert ist, wobei der zweite Sektor eine Bogenlänge aufweist, die von einem zentralen entgegengesetzt gelegenem Winkel in einem Bereich von weniger als 90° definiert ist.

2. Verfahren gemäß Anspruch 1, wobei die Seitenwände des Käfigs (13) mehrere diamantförmige Löcher aufweisen, die näherungsweise 0,5 Inch und näherungsweise 1,0 Inch entsprechend näherungsweise 1,27 cm und näherungsweise 2,54 cm in minimaler und maximaler Abmessung aufweisen.

3. Verfahren gemäß Anspruch 1 oder 2, wobei die Temperatur des Verfahrensdampfes, wenn er auf die Lebensmittelprodukte (31) einwirkt, in den Bereich von etwa 350°F bis 450°F entsprechend 177°C bis 232°C fällt.

4. Verfahren gemäß irgendeinem der Ansprüche 1 bis 3, wobei die Geschwindigkeit des Verfahrensdampfes, wenn er auf die Lebensmittelprodukte (31) einwirkt, in den Bereich von etwa 5000 bis 15000 Fuß pro Minute entsprechend 1525 bis 4573 Meter pro Minute fällt.

5. Verfahren gemäß irgendeinem der Ansprüche 1 bis 4, wobei der Käfig (13), auf den der Verfahrensdampf einwirkt, bei einer Rate rotiert wird, die in den Bereich von 4 rpm bis 60 rpm, bevorzugt 4 rpm bis 50 rpm und am meisten bevorzugt 4 rpm bis 40 rpm (Umdrehungen pro Minute) fällt.

6. Verfahren gemäß irgendeinem der Ansprüche 1 bis 5, wobei die Längsbewegung der Lebensmittelprodukte (31) in dem rotierbaren Käfig (13) durch ein wendelförmig konfiguriertes internes stationäres Leitblech (32) verursacht wird, das mit dem Käfig (13) Bewegungsabteilungen definiert, die die Lebensmittelprodukte zur Behandlung mit Verfahrensdampf in Gruppen unterteilen, was zu einer gleichmäßigeren Dehydration führt, wobei sich das Leitblech (32) entlang des Käfigs (13) von einem Ende zum anderen Ende davon erstreckt.

7. Verfahren gemäß Anspruch 5, wobei sich ein zentrales zylindrisches Element (35) entlang der Achse des Leitblechs (32) erstreckt, das bereitgestellt ist, um eine Bewegung der Lebensmittelprodukte (31) von Seite zu Seite über die Wendel (32) von blockieren.

8. Verfahren gemäß irgendeinem der Ansprüche 1 bis 7, wobei eine Verschiebebewegung der Lebensmittelprodukte (31) entlang der Seitenwand des rotierbaren Käfigs (13) durch Seitenwandgreifkräfte abgeschwächt wird, wobei die Seitenwände des Käfigs (13) eine gewarzte Oberfläche aufweisen, um ein Anhaften der Lebensmittelprodukte zu reduzieren.

9. Verfahren gemäß irgendeinem der Ansprüche 1 bis 8, wobei die Lebensmittelprodukte (31) mehreren Ofenumgebungen (11) ausgesetzt werden, um den gewünschten Ausgangsfeuchtigkeitszustand zu erreichen.

10. Luftumwälzofen zur ölfreien Herstellung von dehydratisierten Lebensmittelprodukten, wobei die Lebensmittelprodukte eins von Kartoffelchips, Chips aus anderen Wurzelfrüchten und durch Expansion hergestellten Pellets sind, wobei der Luftumwälzofen umfasst:
ein Produkteinspeisende (37) zum Aufnehmen von Lebensmittelprodukten (31) in einen rotierbaren, sich längs erstreckenden Käfig (13) mit zylindrischer und durchbrochener Seitenwandkonstruktion (28), der in wenigstens einer Ofenumgebung (11) angeordnet ist, wobei die Lebensmittelprodukte (31) aus einem Ausgangsmaterial der Lebensmittelprodukte zubereitet sind;
wobei der Käfig (13), in dem die Lebensmittelprodukte angeordnet sind, einen ersten Sektor aufweist, gegen den ein Verfahrensdampf bei einer Temperatur die wesentlich höher als die der Lebensmittelprodukte (31) ist, einwirkt, wobei der Verfahrensdampf in dem Ofen (11) bereitgestellt ist;
wobei der Käfig (13), in dem die Lebensmittelprodukte (31) angeordnet sind, einen zweiten Sektor aufweist, von dem der Verfahrensdampf bei einer kühleren Temperatur abgezogen wird während der Käfig (13) zur Rotation gebracht wird und die Lebensmittelprodukte (31) dazu gebracht werden den Käfig (13) dabei in Längsrichtung zu durchqueren, um den Feuchtigkeitsgehalt der Lebensmittelprodukte (31) zu reduzieren, damit dieser in den Bereich von etwa 20% bis 70% Feuchtigkeit fällt, wobei der erste Sektor eine Bogenlänge aufweist, die von einem zentralen entgegengesetzt gelegenem Winkel in einem Bereich zwischen 180° und 90° definiert ist, wobei der zweite Sektor eine Bogenlänge aufweist, die von einem zentralen entgegengesetzt gelegenem Winkel in einem Bereich von weniger als 90° definiert ist; und
ein Produktausgabeende (38) zum Entfernen der Lebensmittelprodukte (31) aus dem Käfig (13) zur weiteren Verarbeitung,
wobei die Lebensmittelprodukte, die in dem Luftumwälzofen (11) verarbeitet werden, weiterhin für eine Zeitspanne in eine Trocknungszone gespeist werden, um den Schnittfeuchtigkeitsgehalt zu reduzieren, damit dieser in den Bereich von etwa 1,20% bis 2,50% Feuchtigkeit fällt.

11. Luftumwälzofen gemäß Anspruch 10, wobei die Seitenwände des Käfigs (13) mehrere diamantförmige Löcher aufweisen, die näherungsweise 0,5 Inch und näherungsweise 1,0 Inch entsprechend näherungsweise 1,27 cm und näherungsweise 2,54 cm in minimaler und maximaler Abmessung aufweisen.

12. Luftumwälzofen gemäß Anspruch 10 oder 11, wobei die Temperatur des Verfahrensdampfes, wenn er auf die Lebensmittelprodukte (31) einwirkt, in den Bereich von etwa 350°F bis 450°F entsprechend 177°C bis 232°C fällt.

13. Luftumwälzofen gemäß irgendeinem der Ansprüche 10 bis 12, wobei die Geschwindigkeit des Verfahrensdampfes, wenn er auf die Lebensmittelprodukte (31) einwirkt, in den Bereich von etwa 5000 bis 15000 Fuß pro Minute entsprechend 1525 bis 4573 Meter pro Minute fällt.

14. Luftumwälzofen gemäß irgendeinem der Ansprüche 10 bis 13, wobei der Käfig (13), auf den der Verfahrensdampf einwirkt, bei einer Rate rotiert wird, die in den Bereich von 4 rpm bis 60 rpm, bevorzugt 4 rpm bis 50 rpm und am meisten bevorzugt 4 rpm bis 40 rpm (Umdrehungen pro Minute) fällt.

15. Luftumwälzofen gemäß irgendeinem der Ansprüche 10 bis 14, wobei der rotierbare Käfig (13) ein wendelförmig konfiguriertes internes stationäres Leitblech (32) aufweist, um eine Längsbewegung der Lebensmittelprodukte (31) in dem Käfig (13) zu verursachen, wobei das Leitblech (32) mit dem Käfig (13) Bewegungsabteilungen definiert, die die Lebensmittelprodukte zur Behandlung mit Verfahrensdampf in Gruppen unterteilen, was zu einer gleichmäßigeren Dehydration führt, wobei sich das Leitblech (32) entlang des Käfigs (13) von einem Ende zum anderen Ende davon erstreckt.

16. Luftumwälzofen gemäß irgendeinem der Ansprüche 10 bis 15, wobei der Luftumwälzofen weiterhin ein zentrales zylindrisches Element (35) umfasst, das sich entlang der Achse des Leitblechs (32) erstreckt und das dazu dient eine Bewegung der Lebensmittelprodukte (31) von Seite zu Seite über die Wendel (32) von blockieren.

17. Luftumwälzofen gemäß irgendeinem der Ansprüche 10 bis 16, wobei der rotierbare Käfig (13) eine innere Fläche aufweist, um eine Verschiebebewegung der Lebensmittelprodukte (31) entlang der Seitenwand (28) davon durch Seitenwandgreifkräfte abzuschwächen, wobei die Seitenwände des Käfigs (13) eine gewarzte Oberfläche aufweisen, um ein Anhaften der Lebensmittelprodukte zu reduzieren.

18. Luftumwälzofen gemäß irgendeinem der Ansprüche 10 bis 17, weiterhin umfassend mehrere Ofenumgebungen (11), um die Lebensmittelprodukte (31) unterschiedlichen Verfahrensdampfumgebungen auszusetzen, um den gewünschten Ausgangsfeuchtigkeitszustand zu erreichen.

## Revendications

1. Procédé pour la fabrication sans huile de produits alimentaires déshydratés composés de chips de pomme de terre, des chips d'autres plantes à racine et des granulés de croissance, le procédé incluant les étapes préliminaires de préparation des matières premières du produit et ensuite d'introduction des aliments obtenus (31) dans au moins un four (11) possédant une cage (13) rotative, s'étendant de manière longitudinale d'une construction cylindrique, à paroi latérale perforée,
le procédé comprenant en outre :
l'application d'une vapeur, à une température substantiellement plus élevée que celle des produits alimentaires (31), contre un premier secteur de la paroi de la cage (28) dans laquelle les produits alimentaires (31) sont disposés ;
le retrait de la vapeur à une température plus froide à partir d'un deuxième secteur de la cage (13) tout en faisant tourner la cage (13) et en la faisant traverser longitudinalement par les produits alimentaires (31), de manière à réduire la teneur en humidité des produits alimentaires (31) pour la situer dans la plage d'environ 20 % à 70 % d'humidité,
le retrait des produits alimentaires déshydratés (31) de la cage (13) pour un traitement ultérieur ; et
l'introduction des produits alimentaires (31) dans une zone de séchage pendant quelques temps afin de réduire leur teneur en humidité pour la situer dans la plage d'environ 1,20 % à 2,50 % d'humidité,
dans lequel le premier secteur possède une longueur en arc définie par un angle sous-tendu central dans une gamme entre 180° et 90°, dans lequel le second secteur possède une longueur en arc définie par un angle sous-tendu central dans une gamme 90°.

2. Procédé de la revendication 1, dans lequel les parois de la cage (13) possèdent plusieurs trous sous forme de diamant d'environ 0,50 pouces et d'environ 1 pouce correspondant à environ 1,27 cm et environ 2,54 cm comme dimensions minimum et maximum.

3. Procédé de la revendication 1 ou 2, dans lequel la température de la vapeur appliquée sur les produits alimentaires (31) se situe dans la gamme de 350° F à 450° F, ce qui correspond à 177° C à 232° C.

4. Procédé de l'une quelconque des revendications 1 à 3, dans lequel la vitesse de la vapeur appliquée sur les produits alimentaires (31) se situe dans la gamme d'environ 5 000 à 15 000 pieds/mn, ce qui correspond à 1 525 à 4 573 mètres/mn.

5. Procédé selon l'une quelconque des revendications 1 à 4, dans lequel la cage (13) sur laquelle la vapeur est appliquée est tournée à une vitesse qui se situe dans la gamme de 4 tours/mn à 60 tours/mn, de préférence 4 tours/mn à 50 tours/mn, et de manière plus préférable 4 tours/mn à 40 tours/mn (révolutions par minute).

6. Procédé selon l'une quelconque des revendications 1 à 5, dans lequel le déplacement longitudinal des produits alimentaires (31) à l'intérieur de la cage rotative (13) est sollicité par un déflecteur (32) interne fixe configuré en hélice qui définit avec la cage (13) des compartiments mobiles séparant les produits alimentaires en groupes pour le traitement par la vapeur, ce qui résulte en une déshydratation plus uniforme, dans lequel le déflecteur (32) s'étend le long de la cage (13) d'une extrémité à l'autre.

7. Procédé de la revendication 5, dans lequel un élément cylindrique central (35) s'étend le long de l'axe du déflecteur (32) fourni pour bloquer le déplacement des produits alimentaires (31) côte à côte à travers l'hélice (32) .

8. Procédé selon l'une quelconque des revendications 1 à 7, dans lequel le déplacement de coulissage des produits alimentaires (31) le long de la paroi latérale de la cage rotative (13) est atténué par des forces de préhension à la paroi latérale, dans lequel les parois latérales de la cage (13) possèdent une surface alvéolée pour réduire le collage des produits alimentaires.

9. Procédé selon l'une quelconque des revendications 1 à 8, dans lequel les produits alimentaires (31) sont soumis à une pluralité de four (11) pour atteindre l'état d'humidité de sortie désiré.

10. Four à courant d'air pour la fabrication sans huile de produits alimentaires déshydratés composés de chips de pomme de terre, des chips d'autres plantes à racine et des granulés de croissance, le four à courant d'air comprenant :
une entrée de produit (37) pour recevoir les produits alimentaires (31) une cage rotative s'étendant longitudinalement (13) d'une construction cylindrique,
à paroi latérale perforée (28) disposée dans au moins un four (11), dans lequel les produits alimentaires (31) ont été préparés à partir d'une matière première du produit alimentaire ;
dans lequel la cage (13), dans laquelle les produits alimentaires sont disposés, possède un premier secteur, contre lequel une vapeur à une température substantiellement plus élevée que celle des produits alimentaires (31) est appliquée, où la vapeur est fournie dans le four (11) ;
dans lequel la cage (28), dans laquelle les produits alimentaires (31) sont disposés, possède un deuxième secteur, dans lequel la vapeur est retirée à une température plus faible tandis qu'on applique à la cage (13) un mouvement rotatif et les produits alimentaires (31) traversent la cage (13) longitudinalement de manière à réduire la teneur en humidité des produits alimentaires (31) dans la plage d'environ 20 % à 70 % d'humidité, dans lequel le premier secteur a une longueur en arc définie par un angle sous-tendu central dans une plage entre 180° et 90°, dans lequel le second secteur a une longueur d'arc définie par un angle sous-tendu central dans une plage inférieure à 90°, une sortie de produits (38) pour retirer les produits alimentaires (31) de la cage (13) pour un traitement ultérieur et dans lequel les produits alimentaires (31) traités dans le four à impact d'air (11) sont en outre introduits dans une zone de séchage pendant une période de temps afin de réduire la teneur en humidité de coupe dans la plage d'environ 1,20 % à 2,50 % d'humidité.

11. Four à courant d'air selon la revendication 10, dans lequel les parois latérales de la cage (13) possèdent plusieurs trous sous forme de diamant d'environ 0,50 pouces et d'environ 1 pouce correspondant à environ 1,27 cm et environ 2,54 cm comme dimensions minimum et maximum.

12. Four à courant d'air selon la revendication 10 ou 11, dans lequel la température de la vapeur appliquée sur les produits alimentaires (31) se situe dans la gamme de 350° F à 450° F, ce qui correspond à 177° C à 232° C.

13. Four à courant d'air selon l'une quelconque des revendications 10 à 12, dans lequel la vitesse de la vapeur appliquée sur les produits alimentaires (31) se situe dans la gamme d'environ 5 000 à 15 000 pieds/mn, ce qui correspond à 1 525 à 4 573 mètres/mn.

14. Four à courant d'air selon l'une quelconque des revendications 10 à 13, dans lequel la cage (13) sur laquelle la vapeur est appliquée est tournée à une vitesse qui se situe dans la gamme de 4 tours/mn à 60 tours/mn, de préférence 4 tours/mn à 50 tours/mn, et de manière plus préférable 4 tours/mn à 40 tours/mn (révolutions par minute).

15. Four à courant d'air selon l'une quelconque des revendications 10 à 14, dans lequel la cage rotative (13) présente un déflecteur (32) fixe interne configuré en hélice pour solliciter le déplacement longitudinal des produits alimentaires (31) à l'intérieur de la cage (13), dans lequel le déflecteur (32) définit avec la cage (13) des compartiments mobiles séparant les produits alimentaires en groupes pour le traitement par la vapeur, ce qui résulte en une déshydratation plus uniforme, dans lequel le déflecteur (32) s'étend le long de la cage (13) d'une extrémité à l'autre.

16. Four à courant d'air selon l'une quelconque des revendications 10 à 15, le four à courant d'air comprenant en outre un élément cylindrique central (35) s'étendant le long de l'axe du déflecteur (32), qui sert à bloquer le déplacement des produits alimentaires (31) côte à côte à travers l'hélice (32).

17. Four à courant d'air selon l'une quelconque des revendications 10 à 16, dans lequel la cage rotative (13) possède une surface interne pour atténuer par des forces de préhension à la paroi latérale le coulissage des produits alimentaires (31) le long de la paroi latérale (28), dans lequel les parois latérales de la cage (13) possèdent une surface alvéolée pour réduire le collage des produits alimentaires.

18. Four à courant d'air selon l'une quelconque des revendications 10 à 17, comprenant en outre une pluralité de fours (11) pour soumettre les produits alimentaires (31) à différents fours pour atteindre l'état d'humidité de sortie désiré.
